# EUROPEAN PATENT APPLICATION

(11) **EP 3 964 401 A1**
(43) Date of publication of application: **09.03.2022**
(21) Application number: 21382648.0
(22) Date of filing: 19.07.2021
(51) Int. Cl.: B60R 13/10, B60Q 1/56

(54) **LUMINOUS SUPPORT FOR LICENSE PLATES**

(30) Priority: 02.09.2020 ES 202030896
(71) Applicant: Sanchez Casadevall, Enrique, 17600 Figueres (ES)
(72) Inventor: Sanchez Casadevall, Enrique, 17600 Figueres (ES)
(74) Representative: Munoz Garcia, Antonio

(57) **Abstract**

The present invention relates to a luminous support for license plates, formed by a flat base (2) equal to or larger than the license plate (3) for which it is intended and projecting or not projecting at the lower part, defining a region (4) for advertisement, said support being transparent, made of methacrylate or another material, and incorporating, embedded in the center thereof, concealed behind the license plate (3), LED lighting means (5) completely or partially illuminating the peripheral edge (2a) of the flat base (2) and, where appropriate, the printed advertising elements in the region (4) of the lower part thereof projecting with respect to the license plate (3). The LED lighting means (5) comprise a connection board (6), a connection cable (7), and a plurality of LED diodes (8) incorporated around said connection board (6) and oriented towards the peripheral edge (2a) of the base (2).

## Description

### OBJECT OF THE INVENTION

As expressed in the title of the present specification, the invention relates to a luminous support for license plates, providing advantages and features described in detail below to the intended function.

More specifically, the object of the invention focuses on a support of the types formed by a flat base, usually having a peripheral dimension greater than the license plate for which it is intended, projecting at least at the lower part thereof where it defines a region for incorporating printed advertising elements, said support being distinguished by the fact that said flat base is made of a transparent material, preferably methacrylate, and incorporates, embedded in the center thereof, LED lighting means which, when connected to a power supply source, completely or partially illuminate the contour of the base forming the support and, where appropriate, the printed advertising elements in the region of the lower part thereof projecting with respect to the license plate.

### FIELD OF APPLICATION OF THE INVENTION

The field of application of the present invention is comprised within the sector of the industry dedicated to the manufacture of license plates, particularly focusing on the field of supports for license plates.

### BACKGROUND OF THE INVENTION

As is known, license plates, particularly those having a metallic base, are often incorporated in the vehicle body by means of the interposition of a support base which, in addition to providing protection and reinforcement to the plate itself, is often used to incorporate advertising elements, normally of the establishment which installs said plate and in which the vehicle has been acquired.

The objective of the present invention is therefore to develop an improved type of support for incorporating the plate in the vehicle the purpose of which is to enhance the visibility of the plate, and particularly of the advertisement incorporated therein.

Moreover, and in reference to the current state of the art, it must be pointed out that at least the applicant is unaware of the existence of any other support for license plates having technical and structural features that are identical or similar to those of the support herein claimed.

### DISCLOSURE OF THE INVENTION

The luminous support for license plates proposed by the invention allows satisfactorily meeting the objectives indicated above, with the characterizing details making it possible and distinguishing same being suitably described in the final claims accompanying the present description.

As mentioned above, the invention proposes a support for vehicle license plates of the types formed by a flat base, usually having a peripheral dimension greater than the license plate for which it is intended, projecting at least at the lower part thereof where it defines a region for incorporating printed advertising elements, said support being distinguished by the fact that it is formed by a flat base made of a transparent material, preferably methacrylate, although it can also be made of any other material, and incorporates, embedded in the center thereof, so as to be concealed behind the license plate once it is placed, LED lighting means which, when connected to a power supply source, completely or partially illuminate the contour of the base forming the support and, where appropriate, the printed advertising elements in the region of the lower part thereof projecting with respect to the license plate.

Preferably, said lighting means comprise a connection board incorporating, positioned around same and oriented towards the peripheral edge of the transparent base of the support, a plurality of LED diodes, such that it is completely illuminated.

### DESCRIPTION OF THE DRAWINGS

To complement the description being made and for the purpose of helping to better understand the features of the invention, a set of drawings is attached to the present specification as an integral part thereof, in which the following is depicted in an illustrative and non-limiting manner:

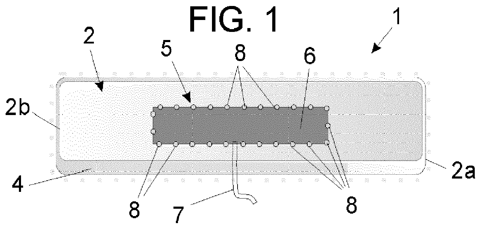

Figure 1 shows a schematic perspective view of an embodiment of the luminous support for license plates object of the invention, depicted separately, without the license plate for which it is intended, where the configuration and parts thereof can be seen, being depicted with the lighting means activated.
Figure 2 shows a perspective view of the example of the support shown in Figure 1, in this case depicted together with the license plate for which it is intended in the phase of coupling said license plate;
Figure 3 and 4 show respective perspective and front elevational views, respectively, of the support of the invention once coupled to the license plate for which it is intended, depicted in Figure 4 with the lighting means activated.

### PREFERRED EMBODIMENT OF THE INVENTION

In view of the mentioned figures and according to the numbering used, there can be observed therein a non-limiting embodiment of the luminous support for license plates of the invention, which comprises that which is indicated and described in detail below.

Therefore, as can be seen said figures, the support (1) is formed by a flat base (2), preferably having a peripheral dimension greater than the license plate (3) for which it is intended and incorporated such that it is placed against said flat base (2), preferably projecting at least on the lower part thereof where it defines a region (4) for incorporating printed advertising elements, wherein said flat base (2) is made of a transparent material, preferably methacrylate, but without discounting any other material, and incorporates, embedded in the center thereof, so as to be concealed behind the license plate (3) once it is placed, LED lighting means (5) such that, when said LED lighting means are connected to a power supply source, they completely or partially illuminate the peripheral edge (2a) of the flat base (2) and, where appropriate, the printed advertising elements in the region (4) of the lower part thereof projecting with respect to the license plate (3).

Preferably, the LED lighting means (5) incorporated in the flat base (2) so as to be embedded in the center thereof comprise a connection board (6) which, suitably provided with a connection cable (7), incorporates a plurality of LED diodes (8) positioned around said board and oriented towards the peripheral edge (2a) of the base (2), such that it is completely illuminated.

Preferably, the connection cable (7) of the LED lighting means (5) of the support (1) is connected to the electrical system of the vehicle itself.

In the preferred embodiment, the flat base (2) made of a transparent material has a step (2b) on its front face defining a recess where the license plate (3) fits. Nevertheless, the flat base may also lack said step and be completely smooth.

Having sufficiently described the nature of the present invention as well as the manner of putting it into practice, it is not considered necessary to expand on this explanation so that one skilled in the art will understand its scope and the advantages derived from it, hereby stating that within its essential nature, the invention may be carried out to practice in other embodiments which differ in detail from that indicated by way of example and will likewise attain the protection that is sought provided that its fundamental principle is not altered, changed, or modified.

## Claims

1. A luminous support for license plates formed by a flat base (2) having a peripheral dimension equal to or greater than the license plate (3) for which it is intended and incorporated such that it is placed against said flat base, and projecting or not projecting at the lower part thereof, defining a region (4) for incorporating printed advertising elements, **characterized by** the fact that said flat base (2) is made of a transparent material and incorporates, embedded in the center thereof, so as to be concealed behind the license plate (3) once it is placed, LED lighting means (5) which, when connected to a power supply source, completely or partially illuminate the peripheral edge (2a) of the flat base (2) and, where appropriate, the printed advertising elements in the region (4) of the lower part thereof projecting with respect to the license plate (3).

2. The luminous support for license plates according to claim 1, **characterized in that** the flat base (2) is made of methacrylate.

3. The luminous support for license plates according to claim 1 or 2, **characterized in that** the LED lighting means (5) incorporated in the flat base (2) so as to be embedded in the center thereof comprise a connection board (6) provided with a connection cable (7) and a plurality of LED diodes (8) incorporated around said connection board (6) and oriented towards the peripheral edge (2a) of the base (2).

4. The luminous support for license plates according to any of claims 1 to 3, **characterized in that** the flat base (2) made of a transparent material has a step (2b) on its front face defining a recess where the license plate (3) fits.
